# EUROPEAN PATENT SPECIFICATION

(11) **EP 4 292 452 B1**
(45) Date of publication and mention of the grant of the patent: **28.01.2026**
(21) Application number: 23171491.6
(22) Date of filing: 04.05.2023
(51) Int. Cl.: A24F 40/40, A24F 40/485, A24F 40/10

(54) **ELECTRONIC ATOMIZATION DEVICE**
ELEKTRONISCHE ZERSTÄUBUNGSVORRICHTUNG
DISPOSITIF D'ATOMISATION ÉLECTRONIQUE

(30) Priority: 15.06.2022 CN 202221500896 U
(43) Date of publication of application: 20.12.2023
(73) Proprietor: Shenzhen Merit Technology Co., Ltd., Shenzhen, Guangdong 518000 (CN)
(72) Inventor: LI, Yafei, Shenzhen (CN); LIAO, Yancheng, Shenzhen (CN); PENG, Ke, Shenzhen (CN); TANG, Yuxiang, Shenzhen (CN); GAO, Chao, Shenzhen (CN)
(74) Representative: Michalski Hüttermann & Partner Patentanwälte mbB

(56) References cited:
- WO-A1-2020/216943
- WO-A1-2020/222496
- CN-A- 107 890 142
- US-A1- 2020 022 417

## Description

### TECHNICAL FIELD

The present application relates to the technical field of atomization, in particular to an electronic atomization device.

### BACKGROUND

Aerosols are colloidal dispersions formed by small solid or liquid masses dispersed and suspended in a gaseous medium. Since aerosol can be absorbed by the human body through the respiratory system, it provides users with a new alternative absorption method. For example, electronic atomization devices that can produce aerosols by heating liquid or solid aerosol-generating substrates are used in different fields to deliver inhalable aerosols to users, as an alternative to conventional product forms and absorption methods.

Generally, the electronic atomization device uses an atomizer to heat the aerosol-generating substrate, which is a substrate material that produces aerosols when being heated. In the related technology, an external airflow enters from a bottom of a power supply structure, and flows out of the power supply structure after flowing through a battery and a motherboard, and then enters to an atomizer to produce aerosols. In this way, an air inlet channel tends to allow the condensate generated during atomization to flow onto the motherboard of the power supply structure, which will corrode and damage the motherboard, resulting in defective products.

CN 107 890 142 A discloses an electronic cigarette with an atomizer and a power supply component. WO2020/222496 A1 discloses an aerosol generating device including a cartridge comprising: an atomizer, a mouthpiece, a main body and a sensor.
US 2020/022417 A1 discloses a vaporization device including a cartridge, a heating element and a wicking element.

### SUMMARY

Accordingly, it is necessary to provide an improved electronic atomization device to solve the problem that condensate in an electronic atomization device flow into the power supply structure, resulting in defective products.

An electronic atomization device according to the present invention is defined in claim 1. This device includes a power supply structure and an atomizer detachably connected to the power supply structure and provided with an atomization cavity. An air inlet channel in communication with external environment and the atomization cavity is defined between the atomizer and the power supply structure.

In the above-mentioned electronic atomization device, after the atomizer is mounted to the power supply structure, the air inlet channel is formed between the atomizer and the power supply structure. An external airflow can flow through the air inlet channel between the atomizer and the power supply structure and flow to the atomization cavity to mix with the aerosol, so that the air inlet channel does not need to flow through an interior of the power supply structure, thereby preventing condensate generated inside the atomizer from flowing into the interior of the power supply structure through the air inlet channel, and preventing electrical components inside the power supply structure from being corroded and damaged by the condensate, thereby protecting the power supply structure and the electronic atomization device, and improving the reliability of the quality of the electronic atomization device.

The power supply structure includes a holder and a housing sleeved on the holder, an accommodating cavity is defined between the housing and the holder, the atomizer is at least partially received in the accommodating cavity, and the air inlet channel is defined between the atomizer and the inner wall of the accommodating cavity.

An air inlet in communication with the air inlet channel and external environment is provided between the housing and the atomizer.

The atomizer includes an atomization main body and a docking boss protruding from the outer surface of the atomization main body, the docking boss is docked with the top of the housing, and the air inlet is provided between the docking boss and the top of the housing.

The docking boss includes a first docking surface, the top of the housing includes a second docking surface facing the first docking surface, the first docking surface is wavy, a part of the second docking surface fits the first docking surface, and another part of the second docking surface is spaced apart from the first docking surface to form the air inlet.

In one of the embodiments, the air inlet channel includes a first air inlet channel and a second air inlet channel that are in communication with each other, the first air inlet channel is defined between the atomizer and the housing, the second air inlet channel is defined between the atomizer and the holder; the end of the first air inlet channel away from the second air inlet channel is in communication with external environment, and the end of the second air inlet channel away from the first air inlet channel is in communication with the atomization cavity.

In one of the embodiments, at least one of two surfaces of the holder and the atomizer facing each other is provided with a plurality of grooves, each groove is in communication with the first air inlet channel and the atomization cavity to form the second air inlet channel.

In one of the embodiments, the plurality of grooves is provided on the top surface of the holder facing the atomizer, each groove has a first notch and a second notch that are in communication with each other in the radial direction of the housing, the first notch is in communication with the first air inlet channel, and the second notch is in communication with the atomization cavity.

In one of the embodiments, the top surface of the holder is provided with a buffer cavity in communication with the atomization cavity, the plurality of grooves are spaced around the outer surface of the buffer cavity, and the second notch of each groove is in communication with the buffer cavity.

In one of the embodiments, the power supply structure further includes an airflow sensor, the holder is provided with a sensing hole in communication with the air inlet channel and the airflow sensor.

In one of the embodiments, a bottom of the atomizer is provided with an opening of the atomization cavity, and the sensing hole is radially misaligned with the opening of the atomization cavity.

In one of the embodiments, the top surface of the holder facing the atomizer is provided with a protrusion, and the sensing hole extends through the protrusion.

In one of the embodiments, the opening of the atomization cavity is aligned with a center line of the housing, and the sensing hole is misaligned with the center line of the housing.

### BRIEF DESCRIPTION OF THE DRAWINGS

FIG. 1 is a perspective view of an electronic atomization device according to an embodiment of the present application.
FIG. 2 is a cross-sectional view of the electronic atomization device shown in FIG. 1.
FIG. 3 is a cross-sectional view of a power supply structure shown in FIG. 2.
FIG. 4 is a perspective view of a holder shown in FIG. 2.

Description of drawings: 100, electronic atomization device; 10, power supply structure; 12, housing; 13, second docking surface; 14, holder; 141, groove; 142, first notch; 143, buffer cavity; 144, second notch; 145, sensing hole; 146, protrusion; 15, accommodating cavity; 16, motherboard; 18, airflow sensor; 30, atomizer; 31, atomization cavity; 32, atomization main body; 34, docking boss; 35, first docking surface; 50, air inlet channel; 51, air inlet; 52, first air inlet channel; 54, second air inlet channel.

### DETAILED DESCRIPTION OF THE EMBODIMENTS

In order to make the above objects, features and advantages of the present application more obvious and easier to understand, the specific embodiments of the present application are described in detail below in combination with the accompanying drawings. Many specific details are set forth in the following description to facilitate a full understanding of the invention. However, the present application can be implemented in many ways different from those described herein, and the invention is not limited by the specific embodiments disclosed below.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which is only for the convenience of describing the present application and simplifying the description, rather than indicating or implying that the device or element must have a specific azimuth, be constructed and operated in a specific azimuth, so it cannot be understood as a limitation of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "multiple" means at least two, such as two, three, etc., unless otherwise expressly and specifically defined.

In the present invention, unless otherwise expressly specified and limited, the terms "mount", "connect", "contact", "fix" and other terms should be understood in a broad sense, for example, they can be fixed connections, removable connections, or integrated. It can be mechanical connection or electrical connection. It can be directly connected or indirectly connected through an intermediate medium. It can be the connection within two elements or the interaction relationship between two elements, unless otherwise expressly limited. For those skilled in the art, the specific meaning of the above terms in the present application can be understood according to the specific situation.

In the present invention, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "provided on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

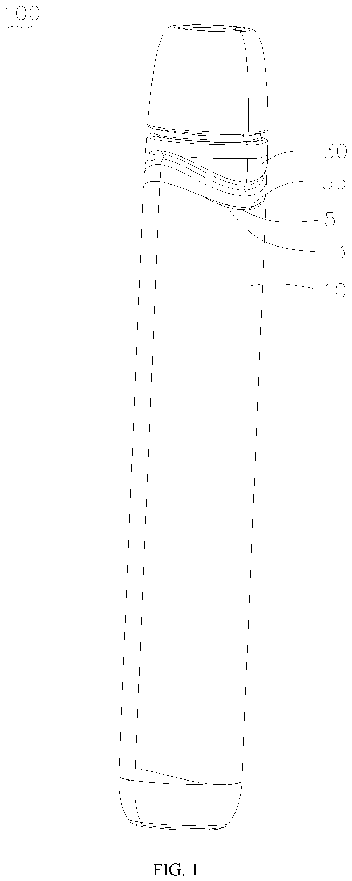

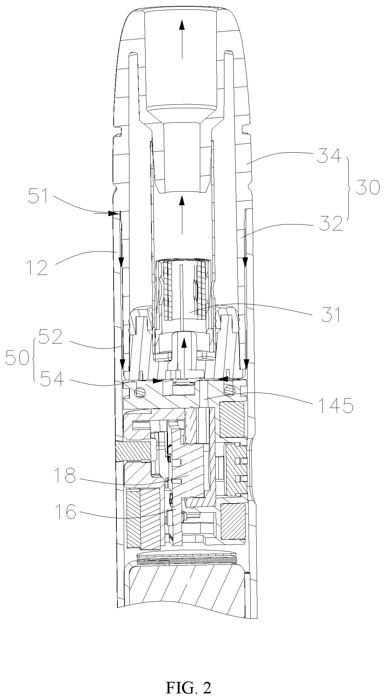

Referring to FIG. 1 and FIG. 2, an embodiment of the present application provides an electronic atomization device 100, which includes a power supply structure 10 and an atomizer 30. The atomizer 30 is detachably connected to the power supply structure 10 to provide power to the atomizer 30 through the power supply structure 10. The atomizer 30 is configured to heat and atomize an aerosol-generating substrate to form an aerosol for a user to inhale.

The atomizer 30 is provided with an atomization cavity 31, the aerosol-generating substrate is heated in the atomization cavity 31 to produce the aerosol. An air inlet channel 50 in communication with external environment and the atomization cavity 31 is defined between the atomizer 30 and the power supply structure 10. In other words, after the atomizer 30 is mounted to the power supply structure 10, the air inlet channel 50 is formed between the atomizer 30 and the power supply structure 10. External air can flow into the atomization cavity 31 through the air inlet channel 50 between the atomizer 30 and the power supply structure 10 to be mixed with the aerosol, so that the air does not need to flow through an interior of the power supply structure 10, thereby preventing condensate generated inside the atomizer 30 from flowing into the interior of the power supply structure 10 through the air inlet channel 50, and preventing the electrical components inside the power supply structure 10 from being corroded and damaged by the condensate, thereby protecting the power supply structure 10, and improving the quality reliability of the electronic atomization device 100.

Referring to FIGS. 1 to 3, in some embodiments, the power supply structure 10 includes a holder 14 and a housing 12 sleeved on the holder 14. An accommodating cavity 15 is defined between the housing 12 and the holder 14, and the atomizer 30 is at least partially received in the accommodating cavity 15. The air inlet channel 50 is defined between the atomizer 30 and the inner wall of the accommodating cavity 15. As an installation foundation, a bottom of the holder 14 is configured to mount the internal components of the power supply structure 10, and the accommodating cavity 15 is defined between the top of the holder 14 and the housing 12, and the atomizer 30 is partially received in the accommodating cavity 15. Furthermore, the air inlet channel 50 is defined between the inner wall of the accommodating cavity 15 and the atomizer 30, the external air flows through the air inlet channel 50 between the inner wall of the accommodating cavity 15 and the atomizer 30 and then flows to the atomization cavity 31, and the air channel 50 does not pass through the interior of the holder 14, so as to protect the electronic components at the bottom of the holder 14.

Further, an air inlet 51 in communication with the air inlet channel 50 and external environment is provided between the housing 12 and the atomizer 30. That is, after the atomizer 30 and the housing 12 are assembled to each other, the air inlet 51 is formed between the atomizer 30 and the housing 12, which allows the external airflow to flow to the air inlet channel 50 through the air inlet 51.

Specifically, the atomizer 30 includes an atomization main body 32 and a docking boss 34 provided on the outer surface of the atomization main body 32. The docking boss 34 is connected to the top of the housing 12, and the air inlet 51 is provided between the docking boss 34 and the top of the housing 12. On the one hand, since the docking boss 34 protrudes from the atomizer 30, when mounting the atomizer 30, the docking boss 34 can be connected to the top of the housing 12, and the depth of the atomizer 30 extending into the accommodating cavity 15 can be limited by the docking boss 34. On the other hand, the air inlet 51 is provided between the docking boss 34 and the top of the housing 12 to facilitate air intake.

In some embodiments, the air inlet channel 50 includes a first air inlet channel 52 and a second air inlet channel 54 that are in communication with each other. The first air inlet channel 52 is defined between the atomizer 30 and the housing 12, and the second air inlet channel 54 is defined between the atomizer 30 and the holder 14. The end of the first air inlet channel 52 away from the second air inlet channel 54 is in communication with external environment, and the end of the second air inlet channel 54 away from the first air inlet channel 52 is in communication with the atomization cavity 31. After flowing through the first air inlet channel 52 between the housing 12 and the atomizer 30, the external airflow flows to the second air inlet channel 54 between the atomizer 30 and the holder 14, and finally flows to the atomization cavity 31 to complete the air intake.

Optionally, the first air inlet channel 52 is formed by a gap between the atomizer 30 and the housing 12, so as to allow external air to flow to the second air inlet channel 54 through the gap. Optionally, the air inlet 51 is in communication with the first air inlet channel 52 to allow the external air to enter the first air inlet channel 52.

Referring to FIG. 1, the docking boss 34 includes a first docking surface 35, and the top of the housing 12 includes a second docking surface 13 facing the first docking surface 35. The first docking surface 35 and the second docking surface 13 both have a wavy shape. A part of the second docking surface 13 fits the first docking surface 35, and the other part thereof is spaced apart from the first docking surface 35, so as to form the air inlet 51. In this way, when the power supply structure 10 and the atomizer 30 are assembled, the wavy docking surfaces 35 and 13 can guide and limit the docking of the power supply structure 10 and the atomizer 30 in the circumferential direction, so as to prevent the atomizer 30 from rotating relative to the power supply structure 10 and causing an assembly position deviation. Furthermore, a portion of the second docking surface 13 is spaced apart from the first docking surface 35 to form the air inlet 51. That is, when the second mating surface 13 and the first ducking surface 35 are designed to fit each other, the portion of the second mating surface 13 is provided to be spaced apart from the first docking surface 35 to form the air inlet 51, which allows the external air to flow into the air inlet channel 50. Optionally, the air inlet 51 is crescent-shaped.

In some embodiments, a plurality of air inlets 51 are provided, and the plurality of air inlets 51 are evenly spaced along the circumferential direction of the housing 12 to ensure the amount of air intake. For example, two air inlets 51 are provided, the two air inlets 51 are located opposite to each other, such that the external air can enter from both sides. It should be understood that, in some embodiments, one air inlet 51 is provided, and the external air enters the electronic atomization device 100 from one side. The number of the air inlet 51 is not limited herein.

In some embodiments, at least one of two surfaces of the holder 14 and the atomizer 30 facing each other is provided with a plurality of grooves 141. Each groove 141 is in communication with the first air inlet channel 52 and the atomization cavity 31 to form the second air inlet channel 54, the airflow is conducted between the holder 14 and the atomizer 30 through the groove 141.

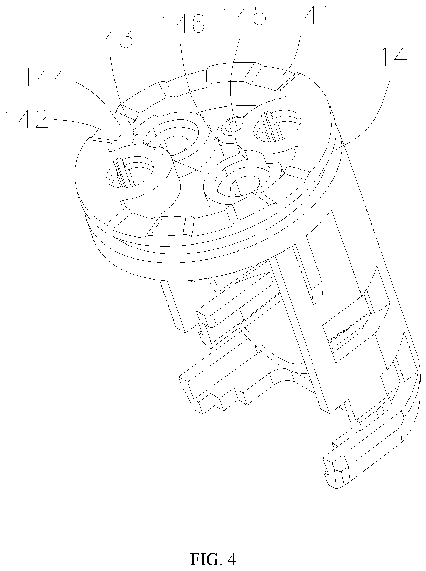

Referring to FIG. 4, the plurality of grooves 141 is provided on the top surface of the holder 14 facing the atomizer 30, and each groove 141 has a first notch 142 and a second notch 144 that are in communication with each other in the radial direction of the housing 12. The first notch 142 is in communication with the first air inlet channel 52, and the second notch 144 is in communication with the atomization cavity 31. That is, the airflow enters to the first air inlet channel 52 through the first notch 142 of the groove 141 and flows out of the atomization cavity 31 through the second notch 144 of the groove 141, so as to achieve normal airflow in the second air inlet channel 54.

Furthermore, the plurality of grooves 141 provided on the top surface of the holder 14 can simultaneously take in air, so as to ensure the amount of air intake and ensure the consistency and stability of the inhalation resistance. In addition, the contact area between the atomizer 30 and the holder 14 can be reduced, which is convenient to disassemble the atomizer 30 and the power supply structure 10.

Specifically, the top surface of the holder 14 is provided with a buffer cavity 143 in communication with the atomization cavity 31, and the plurality of grooves 141 are spaced around the outer surface of the buffer cavity 143. The second notch 144 of each groove 141 is in communication with the buffer cavity 143. In this way, the plurality of grooves 141 take in air simultaneously to ensure the amount of air intake and the consistency and stability of the inhalation resistance. Furthermore, the plurality of grooves 141 are in communication with the buffer cavity 143, the air flowing from the plurality of grooves 141 converges in the buffer cavity 143 and then flows to the atomization cavity 31, so that the overall air flows more smoothly.

In some embodiments, a bottom of the atomizer 30 is provided with an opening (not labeled) of the atomization cavity 31. The power supply structure 10 further includes a motherboard 16 and an airflow sensor 18. The motherboard 16 is fixed to the holder 14, and the airflow sensor 18 is mounted on the motherboard 16. The holder 14 is provided with a sensing hole 145 in communication with the air inlet channel 50 and the airflow sensor 18, and the sensing hole 145 is radially misaligned with the opening of the atomization cavity 31. In this way, the airflow sensor 18 and the airflow channel 50 are communicated through the sensing hole 145, and when the airflow through the airflow channel 50, it can be effectively sensed by the airflow sensor 18. Furthermore, since the sensing hole 145 is misaligned with the opening of the atomization cavity 31, the condensate in the atomization cavity 31 can be prevented from flowing into the sensing hole 145 and damaging the airflow sensor 18.

Optionally, the opening of the atomization cavity 31 is aligned with the center line of the housing 12, and the sensing hole 145 is misaligned with the center line of the housing 12. Thus, the sensing hole 145 is radially misaligned with the opening of the atomization cavity 31.

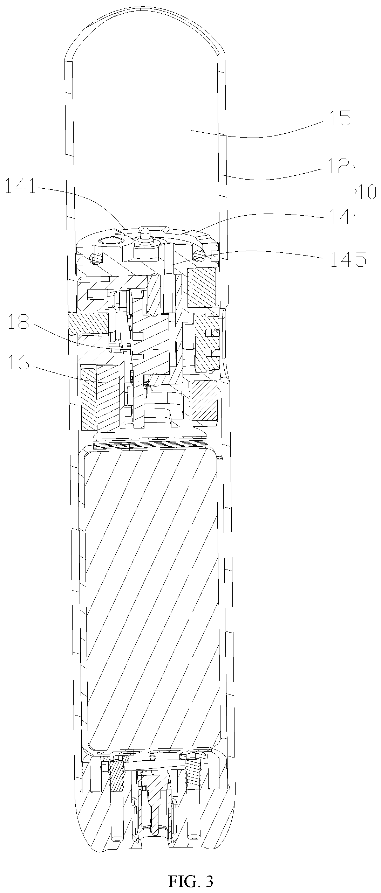

Referring to FIG. 3 and FIG. 4, further, the top surface of the holder 14 facing the atomizer 30 is provided with a protrusion 146, and the sensing hole 145 extends through the protrusion 146. The protrusion 146 can elevate the position of the opening of the sensing hole 145, and prevent the condensate in the atomization cavity 31 from flowing onto the top surface of the holder 14 and then entering to the sensing hole 145, so as to further protect the airflow sensor 18.

## Claims

1. An electronic atomization device (100), comprising:
a power supply structure (10); and
an atomizer (30) detachably connected to the power supply structure (10) and provided with an atomization cavity (31), wherein an air inlet channel (50) in communication with external environment and the atomization cavity (31) is defined between the atomizer (30) and the power supply structure (10);
wherein the power supply structure (10) comprises a holder (14) and a housing (12) sleeved on the holder (14);
wherein an accommodating cavity (15) is defined between the housing (12) and the holder (14), the atomizer (30) is at least partially received in the accommodating cavity (15), and the air inlet channel (50) is defined between the atomizer (30) and the inner wall of the accommodating cavity (15);
wherein an air inlet (51) in communication with the air inlet channel (50) and external environment is provided between the housing (12) and the atomizer (30);
wherein the atomizer (30) comprises an atomization main body (32) and a docking boss (34) provided on the outer surface of the atomization main body (32), the docking boss (34) is docked with the top of the housing (12), and the air inlet (51) is provided between the docking boss (34) and the top of the housing (12);
wherein the docking boss (34) comprises a first docking surface (35), the top of the housing (12) comprises a second docking surface (13) facing the first docking surface (35), a part of the second docking surface (13) fits the first docking surface (35), another part of the second docking surface (13) is spaced apart from the first docking surface (35) to form the air inlet (51);
wherein the first docking surface (35) and the second docking surface (13) both have a wavy shape and are configured to guide and limit the docking of the power supply structure (10) and the atomizer (30) in the circumferential direction.

2. The electronic atomization device according to claim 1, wherein a plurality of air inlets (51) are provided, and the plurality of air inlets (51) are evenly spaced along the circumferential direction of the housing (12).

3. The electronic atomization device according to claim 1, wherein the air inlet (51) is crescent-shaped.

4. The electronic atomization device according to claim 1, wherein the air inlet channel (50) comprises a first air inlet channel (52) and a second air inlet channel (54) that are in communication with each other, the first air inlet channel (52) is defined between the atomizer (30) and the housing (12), the second air inlet channel (54) is defined between the atomizer (30) and the holder (14); the end of the first air inlet channel (52) away from the second air inlet channel (54) is in communication with external environment, and the end of the second air inlet channel (54) away from the first air inlet channel (52) is in communication with the atomization cavity (31).

5. The electronic atomization device according to claim 4, wherein at least one of two surfaces of the holder (14) and the atomizer (30) facing each other is provided with a plurality of grooves (141), each groove (141) is in communication with the first air inlet channel (52) and the atomization cavity (31) to form the second air inlet channel (54).

6. The electronic atomization device according to claim 5, wherein the plurality of grooves (141) is provided on the top surface of the holder (14) facing the atomizer (30), each groove (141) has a first notch (142) and a second notch (144) that are in communication with each other in the radial direction of the housing (12), the first notch (142) is in communication with the first air inlet channel (52), and the second notch (144) is in communication with the atomization cavity (31).

7. The electronic atomization device according to claim 6, wherein the top surface of the holder (14) is provided with a buffer cavity (143) in communication with the atomization cavity (31), the plurality of grooves (141) are spaced around the outer surface of the buffer cavity (143), and the second notch (144) of each groove (141) is in communication with the buffer cavity (143).

8. The electronic atomization device according to claim 1, wherein the power supply structure (10) further comprises an airflow sensor (18), the holder (14) is provided with a sensing hole (145) in communication with the air inlet channel (50) and the airflow sensor (18).

9. The electronic atomization device according to claim 8, wherein the bottom of the atomizer (30) is provided with an opening of the atomization cavity (31), and the sensing hole (145) is radially misaligned with the opening of the atomization cavity (31).

10. The electronic atomization device according to claim 8, wherein the top surface of the holder (14) facing the atomizer (30) is provided with a protrusion (146), and the sensing hole (145) extends through the protrusion (146).

11. The electronic atomization device according to claim 9, wherein the opening of the atomization cavity (31) is aligned with the center line of the housing (12), and the sensing hole (145) is misaligned with the center line of the housing (12).

## Patentansprüche

1. Elektronische Zerstäubungsvorrichtung (100), aufweisend:
eine Stromversorgungsstruktur (10); und
einen Zerstäuber (30), der abnehmbar mit der Stromversorgungsstruktur (10) verbunden ist und mit einem Zerstäubungshohlraum (31) versehen ist, wobei ein Lufteinlasskanal (50) in Kommunikation mit einer Außenumgebung und dem Zerstäubungshohlraum (31) zwischen dem Zerstäuber (30) und der Stromversorgungsstruktur (10) definiert ist;
wobei die Stromversorgungsstruktur (10) einen Halter (14) und ein auf den Halter (14) aufgezogenes Gehäuse (12) aufweist;
wobei ein Aufnahmehohlraum (15) zwischen dem Gehäuse (12) und dem Halter (14) definiert ist, der Zerstäuber (30) zumindest teilweise in den Aufnahmehohlraum (15) aufgenommen ist und der Lufteinlasskanal (50) zwischen dem Zerstäuber (30) und der Innenwand des Aufnahmehohlraums (15) definiert ist;
wobei ein Lufteinlass (51) in Kommunikation mit dem Lufteinlasskanal (50) und der Außenumgebung zwischen dem Gehäuse (12) und dem Zerstäuber (30) bereitgestellt ist;
wobei der Zerstäuber (30) einen Zerstäubungshauptkörper (32) und einen auf der Außenfläche des Zerstäubungshauptkörpers (32) bereitgestellten Andockvorsprung (34) aufweist, der Andockvorsprung (34) an die Oberseite des Gehäuses (12) angedockt ist und der Lufteinlass (51) zwischen dem Andockvorsprung (34) und der Oberseite des Gehäuses (12) bereitgestellt ist;
wobei der Andockvorsprung (34) eine erste Andockfläche (35) aufweist, die Oberseite des Gehäuses (12) eine der ersten Andockfläche (35) zugewandte zweite Andockfläche (13) aufweist, ein Teil der zweiten Andockfläche (13) an die erste Andockfläche (35) passt, ein anderer Teil der zweiten Andockfläche (13) von der ersten Andockfläche (35) beabstandet ist, um den Lufteinlass (51) zu bilden;
wobei sowohl die erste Andockfläche (35) als auch die zweite Andockfläche (13) eine wellenförmige Form aufweist und dazu eingerichtet ist, das Andocken der Stromversorgungsstruktur (10) und des Zerstäubers (30) in der Umfangsrichtung zu führen und zu begrenzen.

2. Elektronische Zerstäubungsvorrichtung nach Anspruch 1, wobei mehrere Lufteinlässe (51) bereitgestellt sind und die mehreren Lufteinlässe (51) gleichmäßig entlang der Umfangsrichtung des Gehäuses (12) beabstandet sind.

3. Elektronische Zerstäubungsvorrichtung nach Anspruch 1, wobei der Lufteinlass (51) halbmondförmig ist.

4. Elektronische Zerstäubungsvorrichtung nach Anspruch 1, wobei der Lufteinlasskanal (50) einen ersten Lufteinlasskanal (52) und einen zweiten Lufteinlasskanal (54) umfasst, die miteinander in Kommunikation stehen, der erste Lufteinlasskanal (52) zwischen dem Zerstäuber (30) und dem Gehäuse (12) definiert ist, der zweite Lufteinlasskanal (54) zwischen dem Zerstäuber (30) und dem Halter (14) definiert ist; das vom zweiten Lufteinlasskanal (54) entfernte Ende des ersten Lufteinlasskanals (52) in Kommunikation mit der Außenumgebung steht und das vom ersten Lufteinlasskanal (52) entfernte Ende des zweiten Lufteinlasskanals (54) in Kommunikation mit dem Zerstäubungshohlraum (31) steht.

5. Elektronische Zerstäubungsvorrichtung nach Anspruch 4, wobei mindestens eine der beiden einander zugewandten Oberflächen des Halters (14) und des Zerstäubers (30) mit mehreren Nuten (141) versehen ist und jede Nut (141) in Kommunikation mit dem ersten Lufteinlasskanal (52) und dem Zerstäubungshohlraum (31) steht, um den zweiten Lufteinlasskanal (54) zu bilden.

6. Elektronische Zerstäubungsvorrichtung nach Anspruch 5, wobei die mehreren Nuten (141) auf der oberen Oberfläche des Halters (14) bereitgestellt ist, die dem Zerstäuber (30) zugewandt ist, jede Nut (141) eine erste Kerbe (142) und eine zweite Kerbe (144) aufweist, die in der radialen Richtung des Gehäuses (12) miteinander in Kommunikation stehen, die erste Kerbe (142) mit dem ersten Lufteinlasskanal (52) in Kommunikation steht und die zweite Kerbe (144) mit dem Zerstäubungshohlraum (31) in Kommunikation steht.

7. Elektronische Zerstäubungsvorrichtung nach Anspruch 6, wobei die obere Oberfläche des Halters (14) mit einem Pufferhohlraum (143) versehen ist, der mit dem Zerstäubungshohlraum (31) in Kommunikation steht, die mehreren Nuten (141) um die Außenfläche des Pufferhohlraums (143) herum beabstandet sind und die zweite Kerbe (144) jeder Nut (141) mit dem Pufferhohlraum (143) in Kommunikation steht.

8. Elektronische Zerstäubungsvorrichtung nach Anspruch 1, wobei die Stromversorgungsstruktur (10) ferner einen Luftstromsensor (18) aufweist und der Halter (14) mit einem Messloch (145) versehen ist, das mit dem Lufteinlasskanal (50) und dem Luftstromsensor (18) in Kommunikation steht.

9. Elektronische Zerstäubungsvorrichtung nach Anspruch 8, wobei der Boden des Zerstäubers (30) mit einer Öffnung des Zerstäubungshohlraums (31) versehen ist und das Messloch (145) radial mit der Öffnung des Zerstäubungshohlraums (31) fehlausgerichtet ist.

10. Elektronische Zerstäubungsvorrichtung nach Anspruch 8, wobei die obere Oberfläche des Halters (14), die dem Zerstäuber (30) zugewandt ist, mit einem Überstand (146) versehen ist und das Messloch (145) durch den Überstand (146) verläuft.

11. Elektronische Zerstäubungsvorrichtung nach Anspruch 9, wobei die Öffnung des Zerstäubungshohlraums (31) mit der Mittellinie des Gehäuses (12) ausgerichtet ist und das Messloch (145) mit der Mittellinie des Gehäuses (12) fehlausgerichtet ist.

## Revendications

1. Dispositif d'atomisation électronique (100), comprenant:
une structure d'alimentation électrique (10); et
un atomiseur (30) relié de manière amovible à la structure d'alimentation électrique (10) et pourvu d'une cavité d'atomisation (31), dans lequel un canal d'entrée d'air (50) en communication avec l'environnement extérieur et la cavité d'atomisation (31) est défini entre l'atomiseur (30) et la structure d'alimentation électrique (10);
dans lequel la structure d'alimentation électrique (10) comprend un support (14) et un boîtier (12) emboîté sur le support (14);
dans lequel une cavité de logement (15) est définie entre le boîtier (12) et le support (14), l'atomiseur (30) est au moins partiellement logé dans la cavité de logement (15), et le canal d'entrée d'air (50) est défini entre l'atomiseur (30) et la paroi intérieure de la cavité de logement (15);
dans lequel une entrée d'air (51) en communication avec le canal d'entrée d'air (50) et l'environnement extérieur est prévue entre le boîtier (12) et l'atomiseur (30);
dans lequel l'atomiseur (30) comprend un corps principal d'atomisation (32) et un bossage d'ancrage (34) prévu sur la surface extérieure du corps principal d'atomisation (32), le bossage d'ancrage (34) est ancré à la partie supérieure du boîtier (12), et l'entrée d'air (51) est prévue entre le bossage d'ancrage (34) et la partie supérieure du boîtier (12);
dans lequel le bossage d'ancrage (34) comprend une première surface d'ancrage (35), la partie supérieure du boîtier (12) comprend une deuxième surface d'ancrage (13) faisant face à le première surface d'ancrage (35), une partie de la deuxième surface d'ancrage (13) s'adapte à la première surface d'ancrage (35), une autre partie de la deuxième surface d'ancrage (13) est espacée de la première surface d'ancrage (35) pour former l'entrée d'air (51);
dans lequel la première surface d'ancrage (35) et la deuxième surface d'ancrage (13) ont toutes deux une forme ondulée et sont configurées pour guider et limiter l'ancrage de la structure d'alimentation électrique (10) et de l'atomiseur (30) dans la direction circonférentielle.

2. Dispositif d'atomisation électronique selon la revendication 1, dans lequel une pluralité d'entrées d'air (51) sont prévues, et la pluralité d'entrées d'air (51) sont espacées de manière uniforme le long de la direction circonférentielle du boîtier (12).

3. Dispositif d'atomisation électronique selon la revendication 1, dans lequel l'entrée d'air (51) est en forme de croissant.

4. Dispositif d'atomisation électronique selon la revendication 1, dans lequel le canal d'entrée d'air (50) comprend un premier canal d'entrée d'air (52) et un deuxième canal d'entrée d'air (54) qui sont en communication l'un avec l'autre, le premier canal d'entrée d'air (52) est défini entre l'atomiseur (30) et le boîtier (12), le deuxième canal d'entrée d'air (54) est défini entre l'atomiseur (30) et le support (14); l'extrémité du premier canal d'entrée d'air (52), éloignée du deuxième canal d'entrée d'air (54) est en communication avec l'environnement extérieur, et l'extrémité du deuxième canal d'entrée d'air (54), éloignée du premier canal d'entrée d'air (52), est en communication avec la cavité d'atomisation (31).

5. Dispositif d'atomisation électronique selon la revendication 4, dans lequel au moins l'une des deux surfaces du support (14) et de l'atomiseur (30) se faisant face est pourvue d'une pluralité de rainures (141), chaque rainure (141) étant en communication avec le premier canal d'entrée d'air (52) et la cavité d'atomisation (31) pour former le deuxième canal d'entrée d'air (54).

6. Dispositif d'atomisation électronique selon la revendication 5, dans lequel la pluralité de rainures (141) est prévue sur la surface supérieure du support (14) faisant face à l'atomiseur (30), chaque rainure (141) comporte une première encoche (142) et une deuxième encoche (144) qui sont en communication l'une avec l'autre dans la direction radiale du boîtier (12), la première encoche (142) est en communication avec le premier canal d'entrée d'air (52), et la deuxième encoche (144) est en communication avec la cavité d'atomisation (31).

7. Dispositif d'atomisation électronique selon la revendication 6, dans lequel la surface supérieure du support (14) est pourvue d'une cavité tampon (143) en communication avec la cavité d'atomisation (31), la pluralité de rainures (141) sont espacées autour de la surface extérieure de la cavité tampon (143), et la deuxième encoche (144) de chaque rainure (141) est en communication avec la cavité tampon (143).

8. Dispositif d'atomisation électronique selon la revendication 1, dans lequel la structure d'alimentation électrique (10) comprend en outre un capteur de débit d'air (18), le support (14) est pourvu d'un trou de détection (145) en communication avec le canal d'entrée d'air (50) et le capteur de débit d'air (18).

9. Dispositif d'atomisation électronique selon la revendication 8, dans lequel la partie inférieure de l'atomiseur (30) est pourvue d'une ouverture de la cavité d'atomisation (31), et le trou de détection (145) est désaligné radialement par rapport à l'ouverture de la cavité d'atomisation (31).

10. Dispositif d'atomisation électronique selon la revendication 8, dans lequel la surface supérieure du support (14) faisant face à l'atomiseur (30) est pourvue d'une saillie (146), et le trou de détection (145) s'étend à travers la saillie (146).

11. Dispositif d'atomisation électronique selon la revendication 9, dans lequel l'ouverture de la cavité d'atomisation (31) est alignée avec la ligne centrale du boîtier (12), et le trou de détection (145) est désaligné par rapport à la ligne centrale du boîtier (12).
